# EUROPEAN PATENT SPECIFICATION

(11) **EP 1 685 335 B1**
(45) Date of publication and mention of the grant of the patent: **09.06.2010**
(21) Application number: 04811394.8
(22) Date of filing: 18.11.2004
(51) Int. Cl.: F16H 1/12, F16H 1/14

(54) **LOW ANGLE INTERSECTING AND SKEW AXIS FACE GEAR**
PLANVERZAHNUNG MIT KLEINEM SCHNEIDWINKEL UND SCHRÄG VERLAUFENDER ACHSE
ROUE DE CHAMP A FAIBLE ANGLE D'INTERSECTION ET AXE OBLIQUE

(30) Priority: 18.11.2003 US 715697
(43) Date of publication of application: 02.08.2006
(73) Proprietor: The Boeing Company, Chicago, IL 60606-1596 (US)
(72) Inventor: HAMILTON, Wayne, J., Mesa, Arizona 85208 (US)
(74) Representative: McLeish, Nicholas Alistair Maxwell
(86) International application number: PCT/US2004/038673
(87) International publication number: WO 2005/050057

(56) References cited:
- US-A- 3 505 894
- US-A- 3 570 319
- US-A- 3 803 934

## Description

### FILED OF THE INVENTION

This invention relates generally to mechanical power transmission systems and, more specifically, to gearing arrangements for mechanical power transmission systems having skewed mechanical transmission shafts.

### BACKGROUND OF THE INVENTTON

Power transmission designers tend to avoid low shaft angles if possible but sometimes are constrained to use them. Current gear configurations are not optimized for these low angles and many times they have problems efficiently transferring power. This problem drives the gear designer to use larger and heavier gears. Currently, low shaft angles usually mean the use of crossed axis helical gears. Crossed axis helical gears are configured such that the resulting contact between gears is theoretically a point. This point takes the full load of the gear and thus the gear must be larger and heavier to handle the full load.

US 3,570,319 discloses a system according to the preamble of claim 1 having a power transmission for transmitting power from an input shaft to an output shaft, the output shaft being inclined at an angle to the input shaft. A straight helical gear is provided on the power input shaft and this meshes with a tapered helical gear journalled on the output shaft.

US 3,803,934 discloses a similar system to US 3,570,319, but in this document the disclosure is that both the gear provided on the input shaft and the gear journalled to the output shaft are tapered helical gears.

Therefore, there exists an unmet need for a lightweight gearing system that is capable to handle forces between shafts that are aligned at a low angle.

### SUMMARY OF THE INVENTION

The present invention relates to mechanical power transmission systems and, more specifically, to gearing arrangements for misaligned mechanical power transmission systems.

According to the present invention there is provided a system as claimed in the appended claims.

The apparatus in accordance with the present invention may provide power transmission across misaligned gear joints with significant improvement in performance and reduction in weight, in comparison with comparable prior art devices.

The present invention provides an adapter gear for allowing rotating shafts having a low angular difference to interact. The adapter gear of the present invention may be used when new components are inserted into old systems, shaft alignment cannot be achieved, and the alignment is less than 30°. Various gears may be used, however the adapter gear of the present invention provides a strong lightweight solution that is important for many systems.

The adapter gear is a low angle face gear that includes a drum having an inner cylindrical wall adapted to be mounted on a shaft, and a drum face connected to the inner cylindrical wall. A gear ring is mounted on and fixed to the drum face and gear teeth are formed on an outer circumference of the gear ring. A vector normal to the gear teeth at a radial and a vector perpendicular to the inner cylindrical wall at the radial have an angular difference that is less than 30°.

### BRIEF DESCRIPTION OF THE DRAWINGS

The preferred and alternative embodiments of the present invention are described in detail below with reference to the following drawings.

FIGURE 1 illustrates a gear formed in accordance with an embodiment of the present invention;

FIGURE 2 illustrates a top view of the gear of FIGURE 1;

FIGURE 3 illustrates a cross-sectional view of the gear of FIGURE 1;

FIGURE 4 illustrates a portion of the gear of FIGURE 1; and,

FIGURE 5 illustrates the gear of FIGURE 1 implemented in an example system.

### DETAILED DESCRIPTION OF THE INVENTION

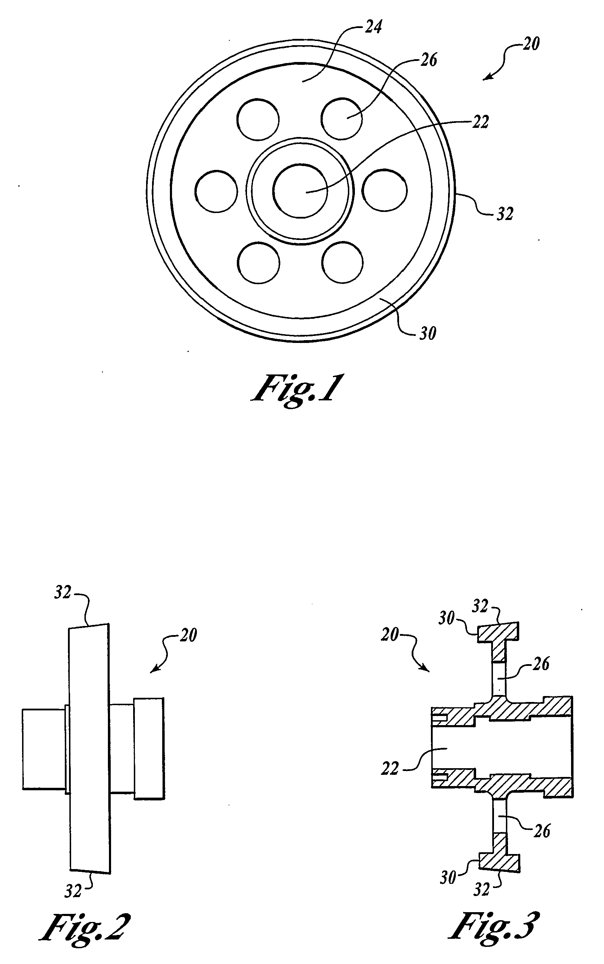

The present invention relates to gears and gearing systems. Many specific details of certain embodiments of the invention are set forth in the following description and in FIGURES 1-5 to provide a thorough understanding of such embodiments. One skilled in the art, however, will understand that the present invention may have additional embodiments, or that the present invention may be practiced without several of the details described in the following description.

FIGURE 1 illustrates a front view of an example low angle face gear 20 that transfers power between two shafts that have a low angle of variance between them. For example, in one particular embodiment, the gear 20 may be used to turn a first shaft from a connection with a gear on a second shaft, where the two shafts have a variance in their angles of 30° or less.

The low angle face gear 20 includes a cavity 22 that receives a shaft of a motor, transmission, or other type of mechanism. A face or drum 24 of the gear 20 surrounds the shaft cavity 22. The drum 24 preferably includes numerous circular cavities 26 for decreasing the overall weight of the gear 20 without sacrificing the structural support that the drum 24 provides. The gear 20 also includes a gear flange 30 that surrounds the drum 24. Located on an outside surface of the gear flange 30 are gears 32. The gear flange 30 is angled out of the plane of the gear 20. In other words, the normal to the surface of the drum 24 is different from the normal of the side surface of the gear flange 30. The angular distance between the two normals varies by a pre-defined amount depending upon the desired angular relationship that one wishes for the gear flange 30.

FIGURE 2 illustrates a top or side view of the gear 20 and FIGURE 3 illustrates a cross-sectional side or top view of the-gear 20. FIGURES 2 and 3 further illustrate that the gears 32 are cantered/skewed at an angle as compared to the gears on a spur gear. In a spur gear, a normal to the plane of the gears is perpendicular to a shaft that is received by the spur gear.

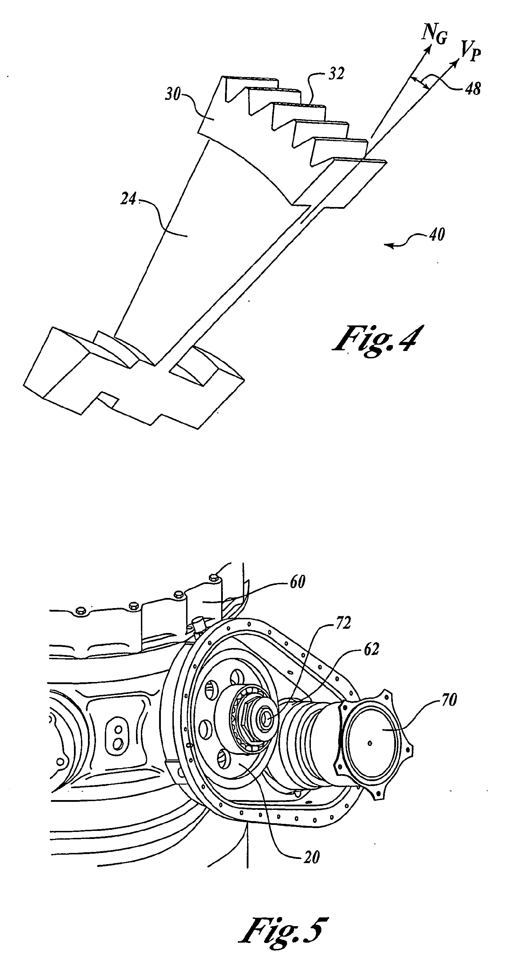

FIGURE 4 illustrates a section 40 of the gear 20. The gear flange 30 with the gears 32 is angled such that the gear flange 30 is not perpendicular with a shaft received through the cavity 22. The angle of the gear flange 30 (see angle 48) is a pre-defined amount depending upon how or where the gear 20 is to be used. The angle 48 is equal to the difference between a vector Ng that is normal to the gears 32 a vector Vp perpendicular to a shaft received through the cavity 22. The angle 48 is generally equal to the angle between the shaft that the low angle face gear 20 receives and a shaft coupled to a spur gear that is linked with the low angle face gear 20.

FIGURE 5 illustrates an example implementation of the gear 20. The gear 20 is used to drive a transmission 60 from a connection to a spur gear 62 mounted on a motor driven shaft 70. In this example, the transmission 60 is a rotary aircraft transmission. The low angle face gear 20 allows a shaft 72 of the transmission 60 to not be quite parallel to the engine shaft 70. The low angle face gear 20 is coupled to the shaft 72 at a location where it links up with the spur gear 62 of the engine shaft 70. Essentially, the low angle face gear 20 is used as an adapter to compensate for the low angle variation between the two shafts 70 and 72.

The low angle face gear 20 may be used anywhere where adapting between shafts having low angled differentials is needed. Also, one can design engine and transmission systems that are not limited to high angled differences between shafts or strictly parallel shafts.

In one embodiment, the gears 32 of the low angle face gear 20 are created by a precision grinding method, such as that shown in U.S. Patent No. 5,823,857 to Tan. When the gears 32 are produced in this manner, higher specific load capabilities are possible, because line contact occurs versus point contact.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A system comprising:
a first system including:
a first shaft (70); and
a first gear mounted to the shaft; and
a second system including:
a second shaft (72); and
a second gear, the system being **characterised in that**
the first gear is a spur gear (62) and the second gear is a low angle face gear (20), the second gear comprising an inner cylindrical wall (22) adapted to be mounted on to the second shaft, an outer cylindrical wall and a drum face (24) connected to said inner cylindrical wall, a gear ring (30) mounted on and fixed to an outer circumference of the drum face (24) and gear teeth (32) formed on an outer circumference of the gear ring, wherein a vector (Ng) normal to the gear teeth at a radial and a vector (Vp) perpendicular to the inner cylindrical wall at the radial have an angular difference that is less than 30°;
and wherein the first shaft (70) and the second shaft (72) are positioned such that the spur gear (62) drives the low angle face gear (20) and the first and second shafts have an angular difference that is less than 30°.

2. The system of Claim 1, wherein the first system includes an engine.

3. The system of either Claim 1 or Claim 2, wherein the second system is a transmission (60).

4. The system of Claim 3, wherein the transmission includes a rotary engine transmission.

5. The system of any preceding claim wherein the first system is a power generation system including an engine and the second system is a receiving system.

## Patentansprüche

1. System aufweisend:
ein erstes System umfassend:
- eine erste Welle (70) und
- ein erstes Zahnrad, das an der Welle befestigt ist, und
ein zweites System umfassend:
- eine zweite Welle (72) und
- ein zweites Zahnrad,
wobei das System **dadurch gekennzeichnet ist,**
**dass** das erste Zahnrad als Stirnrad (62) ausgebildet ist und das zweite Zahnrad als Flachwinkel-Kronenrad (20) ausgebildet ist,
wobei das zweite Zahnrad eine zur Befestigung auf der zweiten Welle ausgebildete innere zylindrische Wand (22), eine äußere zylindrische Wand und eine mit der inneren zylindrischen Wand verbundenen Scheibe (24), einen Zahnkranz (30), der an der äußeren zylindrische Wand angesetzt und an einem äußeren Umfang der Scheibe (24) befestigt ist, und eine an einem äußeren Umfang des Zahnkranzes ausgebildete Verzahnung aufweist, wobei ein lotrecht zu einem Zahnkopf der Zähne des Zahnrads ausgerichteter Vektor (Ng) und ein senkrecht zur inneren zylindrischen Wand ausgerichteter Vektor (Vp) an dem Zahnkopf eine Winkeldifferenz von weniger als 30° aufweisen, und worin die erste Welle (70) und die zweite Welle (72) so angeordnet sind, dass das Stirnrad (62) das Flachwinkel-Kronenrad (20) antreibt und die erste und zweite Welle eine Winkeldifferenz von weniger als 30° aufweisen.

2. System nach Anspruch 1, worin das erste System einen Motor umfasst.

3. System nach Anspruch 1, oder 2, worin das zweite System als Getriebe (60) ausgebildet ist.

4. System nach Anspruch 3, worin das Getriebe ein Rotationsmotorgetriebe umfasst.

5. System nach einem der vorhergehenden Ansprüche, worin das erste System als Energieerzeugungssystem ausgebildet ist, das einen Motor umfasst, und das zweite System ein Empfangssystem ist.

## Revendications

1. Système comprenant:
un premier système comportant:
un premier arbre (70); et
une première roue dentée montée sur l'arbre; et
un deuxième système comportant;
un deuxième arbre (72); et
une deuxième roue dentée, le système étant **caractérisé en ce que**
la première roue dentée est une roue droite (62) et la deuxième roue dentée est une roue de champ à faible angle (20), la deuxième roue dentée comprenant une paroi cylindrique intérieure (22) apte à être montée sur le deuxième arbre, une paroi cylindrique extérieure et une face de tambour (24) reliée à la paroi cylindrique intérieure, une couronne dentée (30) montée sur et fixée à une circonférence extérieure de la face de tambour (24) et des dents d'engrenage (32) formées sur une circonférence extérieure de la couronne dentée, où un vecteur (Ng) normal aux dents d'engrenage à une radiale et un vecteur (Vp) perpendiculaire à la paroi cylindrique intérieure à la radiale ont une différence angulaire qui est inférieure à 30°;
et où le premier arbre (70) et le deuxième arbre (72) sont positionnés de façon que la roue droite (62) entraîne la roue de champ à faible angle (20), et les premier et deuxième arbres ont une différence angulaire qui est inférieure à 30°.

2. Système selon la revendication 1, dans lequel le premier système comporte un moteur.

3. Système selon l'une de la revendication 1 ou de la revendication 2, dans lequel le deuxième système est une transmission (60).

4. Système selon la revendication 3, dans lequel la transmission comporte une transmission de moteur rotatif.

5. Système selon l'une quelconque des revendications précédentes, dans lequel le premier système est un système de génération de puissance comportant un moteur, et le deuxième système est un système de réception.
